**Europäisches Patentamt**

(19) **European Patent Office**

**Office européen des brevets**

(11) Publication number : **0 415 381 B1**

(12) # EUROPEAN PATENT SPECIFICATION

(45) Date of publication of patent specification :
30.06.93 Bulletin 93/26

(51) Int. Cl.⁵ : **F16D 69/04, F16D 65/02**

(21) Application number : **90116561.3**

(22) Date of filing : **29.08.90**

(54) **Method of manufacturing a friction member.**

(30) Priority : **01.09.89 JP 103315/89**

(43) Date of publication of application :
**06.03.91 Bulletin 91/10**

(45) Publication of the grant of the patent :
**30.06.93 Bulletin 93/26**

(84) Designated Contracting States :
**DE FR GB IT**

(56) References cited :
EP-A- 0 254 827
JP-A- 5 124 533
US-A- 2 631 961
PATENT ABSTRACTS OF JAPAN, vol. 4, no.
187 (M-48)[669], 23rd December 1980, page 53
M 48
PATENT ABSTRACTS OF JAPAN, vol. 8, no.
274 (M-345)[1711], 14th December 1984,page
102 M 345

(73) Proprietor : **SUMITOMO ELECTRIC
INDUSTRIES, LTD.
5-33, Kitahama 4-chome, Chuo-ku
Osaka-shi, Osaka 541 (JP)**

(72) Inventor : **Nakagawa, Mitsuhiko, c/o Itami
Works of Sumitomo
Electric Ind. Ltd., 1-1 Koyakita 1-chome
Itami-shi, Hyogo (JP)**

(74) Representative : **Herrmann-Trentepohl,
Werner, Dipl.-Ing. et al
Herrmann-Trentepohl, Kirschner, Grosse,
Bockhorni & Partner Forstenrieder Allee 59
W-8000 München 71 (DE)**

## Description

BACKGROUND OF THE INVENTION

Field of the Invention

The present invention relates generally to friction members and a method of manufacturing the same. More particularly, the present invention relates to friction members for use in brakes of automobiles and the like and a manufacturing method therefor.

Description of the Background Art

A description will be made of a disc pad as a representative of a friction member for use in disc brakes.

A common disc pad is conventionally molded by bonding a pad, that is a friction material, on a backing plate. The disc pad is pressed against a rotating disc to control the rotation of the disc by using the friction force, thereby stopping travelling of an automobile. In this case, the disc pad is subjected to strong shearing strength and frictional heat and directly exposed to air, so that it is also directly affected by wind and rain and such snow melting agents as NaCl and $CaCl_2$. Accordingly, the disc pad is placed under very severe conditions of mechanical strength and corrosion.

Meanwhile, no accident is allowed to happen to the disc brake for safety's sake. Accordingly, the surfaces to be bonded of the pad and the backing plate are required to have such bonding strength as avoiding detachment of the surfaces.

Therefore, conventionally, bonding of the pad to the backing plate is mechanically strengthened by making rough surface on the backing plate by shot blast. While this method is effective when the pad is new, the periphery or the spigot hole portion of the backing plate is rusted when used for long or in case of the travelling on a road with melting snow including salt in a cold place or the like. The rust gradually grows to spread in the bonded surface of the backing plate, resulting in the detachment of the pad from the backing plate or the reduction of the bonding strength, causing disability of the control during the travelling of the automobile, which might lead to an accident.

Therefore, the methods of preventing rusting between the backing plate and the pad have been proposed. They are disclosed in, for example, Japanese Patent Publication No. 57-45939, Japanese Patent Laying-Open No. 51-24533 and Japanese Patent Laying-Open 59-144836, of which descriptions will be given in the following.

Japanese Patent Publication No. 57-45939 discloses the technique of forming a tri-iron tetroxide layer of 0.1-5.0 μm in film thickness on a surface of a backing plate. However, it is not possible by this method to attain such remarkable anticorrosiveness as achieving reliability required of the disc pad.

Japanese Patent Laying-Open No. 51-24533 discloses the technique of improving anticorrosiveness of the backing plate by subjecting the same to gas soft nitriding treatment. However, with this method, the process is made complicated and it is not possible to achieve a remarkable effect in cost reduction and anticorrosiveness.

Japanese Patent Laying-Open No. 59-144836 discloses the improvement of anti-corrosiveness by applying to the surface of the backing plate chromic acid treatment liquid containing 5 weight % of Zn particles having a particle diameter of 5μm. However, while this chromic acid treatment of this liquid allows the improvement in the anticorrosiveness, the liquid is difficult to be treated from the view points of safety, hygiene and pollution and it might be of the high manufacturing cost.

As described above, various methods are proposed for preventing rusting between the backing plate and the pad.

However, it is difficult by any method to achieve such anticorrosiveness as is highly reliable for a disc pad and even if it is possible, there are problems in safety, hygiene, pollution and manufacturing cost.

A conventional disc pad is integrally molded by bonding a backing plate and a lining by an adhesive. Herein, the adhesive is extended due to heat and pressure during the molding of the friction material and it is absorbed by the friction material, so that it is substantially impossible to specify a thickness thereof. Even if the thickness of the adhesive is made larger, it is all the same difficult to specify the thickness because of flow of the adhesive before the curing thereof. Accordingly, it is difficult to expect an adhesive to be anticorrosive in a disc pad which is one example of a conventional friction member. In addition, even a conventional disc pad (friction member) treated so as to prevent rusting has insufficient anticorrosiveness between the backing plate and the pad, resulting in difficulty in maintaining the shearing strength of the friction member for a long time period.

US-A 2 631 961 discloses a method for bonding brake linings to brake shoes comprising the steps of coating an impregnated fibrous material with a resin, applying a solid adhesive consiting of a mixture of certain elastomers to a metallic support member, assembling the friction material and the support member with the coating and adhesive in contact and applying of heat and pressure to the whole assembly.

SUMMARY OF THE INVENTION

One object of the present invention is to maintain anticorrosiveness of a friction member for a long time period.

Another object of the present invention is to improve shearing strength of a friction member.

Briefly stated, according to one aspect of the present invention, a friction member includes a friction material controlling an object by utilizing friction, a backing plate attaching the friction material by using an adhesive layer, and a cured thermosetting organic film formed on the surface of the backing plate, positioned between the adhesive layer under the friction material and the backing plate and having a predetermined film thickness.

Since the cured thermosetting film having a predetermined film thickness is formed on the surface of the backing plate, the cured organic film is not affected by heat or pressure during the molding.

According to another aspect of the present invention, the method of manufacturing the friction member includes the steps of making the rough surface on the backing plate as required after the degreasing thereof, powder coating the surface of the backing plate with resin powder which becomes a cured organic film, completing the cured organic film by the heat treatment, drying an adhesive applied on the cured organic film and arranging a friction material opposedly to and on the adhesive applied surface of the backing plate to be formed and thereafter subjecting the same to the heat treatment.

Since the surface of the backing plate is powder coated with the thermosetting organic film and cured and thereafter the friction material is bonded for integration in the operation, the cured organic film formed on the backing plate is not affected by heat or pressure during the molding.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a sectional view of a structure of a disc pad showing one embodiment of a friction member according to the present invention.

Fig. 2 is a flow diagram explaining a manufacturing process of a disc pad according to one embodiment of the friction member shown in Fig. 1.

DESCRIPTION OF THE PREFERRED EMBODIMENT

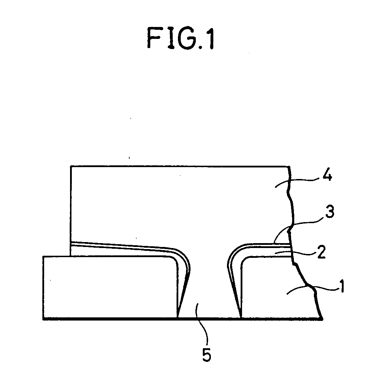

Referring to Fig. 1, the disc pad comprises a backing plate 1 made of SAPH which is an iron material, an organic film 2 formed on the surface of the backing plate 1 and already cured for anticorrosion, a friction material 4 formed on the organic film 2 with an adhesive layer 3 of a phenol resin provided therebetween and formed of 30 weight % of steel fiber, 10 weight % of glass fiber, 10 weight % of aramid fiber, 20 weight % of phenol resin, 10 weight % of barium sulfate, 10 weight % of copper powder and 10 weight % of friction dust. A spigot hole 5 is provided in the backing plate 1 to engage with the friction material 4.

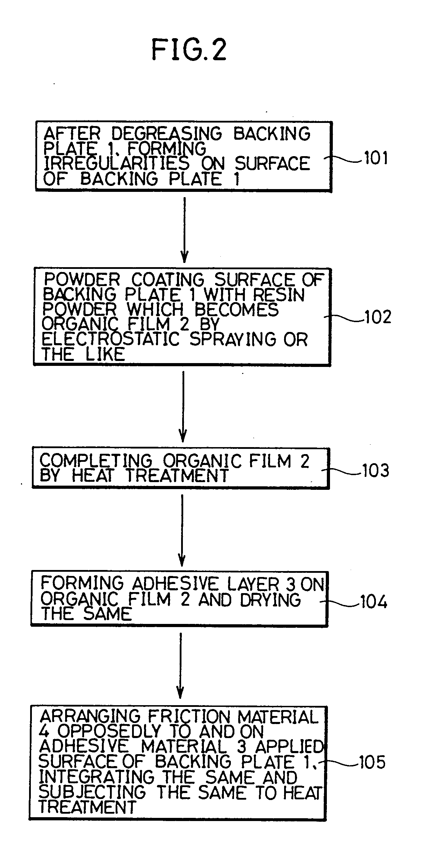

The method of manufacturing the disc pad shown in Fig. 1 will be described with reference to Fig. 2. As shown in the first step 101, after degreasing the backing plate 1 with trichlene trichloroethylene, rough surfaces are made thereof by shot blast. Then, as shown in the second step 102, the surface of the backing plate 1 is coated with such a resin powder as epoxy which becomes the organic film by the electrostatic spraying. Experimentally, the organic film 2 of a predetermined thickness can be obtained by heating the backing plate to 180°C and aprinkling the powder resin through a wire net of 100 meshes. Thereafter, as shown in the second step 103, the heat treatment is performed at 180°C for one hour to complete the organic film 2. As shown by the fourth step 104, an adhesive comprising a phenol resin is applied to the organic film 2 to form the adhesive layer 3, which is dried at a temperature of 80°C for half an hour. Then, as shown in the fifth step 105, it is molded with the friction material 4 in a molding die at a temperature of 160°C. Thereafter, it is further subjected to the heat treatment at a temperature of 200°C for ten hours to obtain a disc pad. The organic film is not limited to epoxy resin, but it may be phenol, melamine, acryl, thermosetting resin or rubber-phenolic powder. While a filler or a coloring agent may be added to these organic matter, it is preferable to add nothing thereto.

It is desirable to use the same or similar material as that of the organic film 2 for a material of the adhesive material layer 3. This is because the usage of the same or similar material allows the improvement of the bonding strength between the organic film 2 and the adhesive layer 3. The considerable anticorrosion effect can be obtained with the organic film 2 having the film thickness of not less than 5 μm or more, and preferably it is 10 ìm or more, and more preferably 15 μm or more.

It is also possible to obtain a similar film to the above-described organic film 2 by spraying a resin dissolved in an organic solvent, drying the solvent and thereafter applying heat for curing. With this method, however, a rate of fixed resin is low and numerous defects are caused such as air bubbles and pits in the film when the organic solvent is evaporated in the curing step. The larger the thickness of the film becomes, the more defects are caused such as air bubble and therefore it is difficult to obtain a film of the thickness large enough not to cause defects. In addition, in terms of the working environment, safety (ignition) and hygiene (organic solvent poisoning), superfluous resin and solvent scattered by a spray are not desirable.

On the other hand, when using such powder resin without containing organic solvent as of the present embodiment, the problems can be resolved such as defects caused by the organic solvent and those in working environment, safety and hygiene. Some powder resin to be used generates such gas as $H_2O$ on ammonium gas due to condensation reaction during the drying and curing. Although the gas is of negligible volume as compared with the above-described solvent, there is possibility of causing defects, so that it is more preferable to use epoxy resin or bis-malemide triazine resin.

The following Table 1 shows testing results of shearing strength and anticorrosiveness of a disc pad which is to one example of a friction member according of the present invention and the conventional disc pad.

## Table 1

|  | shearing strength | rate of non-rusted area |
|---|---|---|
| Example 1 | 75 Kg/cm$^2$ | 100% |
| Example 2 | 73 Kg/cm$^2$ | 95% |
| Example 3 | 73 Kg/cm$^2$ | 98% |
| Reference Example 1 | 60 Kg/cm$^2$ | 85% |
| Reference Example 2 | 66 Kg/cm$^2$ | 77% |

(Notes)  The results of the measurement of 20 cycles of the corrosion bonding test by JASO C444-78

Referring to Table 1, in the example 1, the thickness of the organic film 2 is 30 μm in the above-described method of manufacturing the disc pad according to the present embodiment and in the example 2, the film thickness is 6 μm and the example 3 it is 11 μm.

The reference example 1 shows a case wherein a backing plate made of SAPH is soft nitrided, phenol resin adhesive is directly applied thereto, which is dried, and an adhesive film of 20 μm is formed to be molded with a friction member. The reference example 2 shows a case wherein a backing plate made of SAPH is degreased with trichloroethylene and a tri-iron tetroxide layer of 4 μm is formed on the surface thereof and then the same treatment as that of the reference example 1 is performed.

In Table 1, it can be seen that both the shearing strength and the anticorrosiveness are further improved in the examples 1 and 3 than in the reference examples 1 and 2. It can be also seen that the anticorrosiveness of the examples 1 and 3 becomes strong as the film thickness of the organic film 2 becomes larger. As a result of the observation of the cross section of the disc pad of the examples 1 by using the microscope, it is found that an organic film of about 25 μm is formed all over. Namely, the organic film is scarcely affected by heat or pressure during the molding with the friction member. on the contrary, no film is observed having a definite film thickness in either of the reference example 1 and 2.

4

As described above, by forming the cured organic film 2 on the surface of the backing plate 1, the disc pad according to one example of the friction member shown in Fig. 1 allows prevention of rusting between the backing plate 1 and the friction material 4 to improve anticorrosiveness. In addition, by using the same or similar material as that of the organic film 2 for a material of the adhesive layer 3, the bonding strength between the organic film 2 and the adhesive layer 3 can be increased, thereby improving the shearing strength of the disc pad.

In the method of manufacturing the disc pad according to one example of the friction member shown in Fig. 2, since the adhesive layer 3 and the friction material 4 are bonded to each other to be molded after coating the surface of the backing plate 1 with such resin powder as epoxy by the electrostatic spraying, thereby completing the organic film 2 by a heat treatment, the rusting between the backing plate 1 and the friction material 4 can be effectively prevented.

As the foregoing, since in the friction member according to the present invention, the cured thermosetting organic film of a predetermined thickness is formed on the surface of the backing plate, the thermosetting organic film is not affected by heat or pressure during the molding, so that anticorrosiveness of the friction member can be improved and furthermore, by using the substantially same material as that of the thermosetting organic film for a material of the adhesive layer, the shearing strength of the friction material can be improved.

In addition, in the method of manufacturing the friction member according to the present invention, the surface of the backing plate is powder coated with the thermosetting organic film, subjected to cure and then bonded with the friction material to be molded, the thermosetting organic film formed on the backing plate is not affected by heat or pressure during the molding, so that anticorrosiveness of the friction member can be improved.

## Claims

1. A method of manufacturing a friction member to be integrally formed by adhering a friction material to a backing plate by an adhesive bonding, said method of manufacturing the friction member comprising
   the step (101) of forming a rough surface on said backing plate after degreasing said backing plate,
   the step (102) of powder coating the surface of said backing plate with resin powders which become a thermosetting organic film
   the step (103) of curing said thermosetting organic film by heat treatment,
   the step (104) of removing the solvent contained in the adhesive by drying, after applying the adhesive on said cured organic film, and
   the step (105) of molding by heat processing after arranging the friction material opposedly to and on said adhesive applied surface of said backing plate.

2. Method according to claim 1, wherein a thermosetting resin (2) is used to form said thermosetting organic film which is powder-coated on said backing plate and subjected to curing.

3. Method according to claim 1, wherein a thermosetting organic film (2) is used to form said thermosetting organic film which is a thermosetting resin, epoxy resin, phenol resin, melamine resin, acrylic resin, or a modified-phenolic resin.

4. Method according to claim 1, wherein said adhesive layer (3) is formed of substantially the same material as that of said thermosetting organic film.

## Patentansprüche

1. Verfahren zur Herstellung eines Reibelementes, das integral durch das Anhaften eines Reibmaterials an eine Trägerplatte durch eine haftende Verbindungen gebildet wird, wobei das Verfahren zur Herstellung des Reibelementes umfaßt:
   - einen Schritt (101) zur Bildung einer rauhen Oberfläche auf der Trägerplatte, nachdem die Trägerplatte entfettet wurde,
   - einen Schritt (102) zur Puderbeschichtung der Oberfläche der Trägerplatte mit Harzpulver, das zu einem wärmeaushärtenden Film wird,
   - einen Schritt (103) zum Aushärten des wärmeaushärtenden organischen Filmes durch Wärmebehandlung,
- einen Schritt (104) zum Entfernen des in dem Kleber enthaltenen Lösungsmittels durch Trocknen, nachdem der Kleber auf den ausgehärteten organischen Film aufgetragen wurde, und
- einen Schritt (105) zum Schmelzen durch Wärmebehandlung, nachdem das Reibmaterial gegenüber und auf der klebebehandelten fläche der Trägerplatte angeordnet wurde.

2. Verfahren nach Anspruch 1, worin ein wärmeaushärtendes Harz (2) verwendet wird, um den wärmeaushärtenden organischen Film zu bilden, welcher auf der Trägerplatte pudergeschichtet ist und dem Aushärten unterliegt.

3. Verfahren nach Anspruch 1, worin ein wärmeaushärtender organischer Film (2), der wärmeaushärtendes Harz, Epoxyharz, Phenolharz, Melaminharz, Acrylharz oder einem Modifiziert-Phenolharz umfaßt.

4. Verfahren nach Anspruch 1, worin die haftende Schicht (3) das im wesentlichen gleiche Material umfaßt, wie der wärmeaushärtende organische Film.

**Revendications**

1. Procédé pour la fabrication d'un élément de friction devant être formé solidairement en fixant une matière de friction sur une plaque d'appui par collage, le procédé de fabrication de l'élément de friction comprenant :
l'étape (101) de formation d'une surface rugueuse sur cette plaque d'appui après dégraissage de celle-ci,
l'étape (102) de revêtement de la surface de la plaque d'appui avec des poudres de résine qui se transforment en pellicule organique thermosoudable,
l'étape (103) de cuisson et durcissement de la pellicule organique thermosoudable par traitement thermique,
l'étape (104) d'élimination du solvant contenu dans l'adhésif par séchage, après application de l'adhésif sur la pellicule organique durcie, et
l'étape (105) de moulage par traitement thermique après avoir disposé la matière de friction en opposition à et sur la surface d'application de l'adhésif de la plaque d'appui.

2. Procédé selon la revendication 1, dans lequel on utilise une résine thermosoudable (2) pour former une pellicule organique thermosoudable en revêtant la plaque d'appui de poudre et la soumettant à une cuisson/durcissement.

3. Procédé selon la revendication 1, dans lequel une pellicule organique thermosoudable (2) est utilisée pour former une pellicule organique thermosoudable qui est une résine thermosoudable, une résine époxyde, une résine phénolique, une résine de mélamine, une résine acrylique ou une résine phénolique modifiée.

4. Procédé selon la revendication 1, dans lequel la couche adhésive (3) est constituée par essentiellement le même matériau que celui de la pellicule organique thermosoudable.

# FIG.1

# FIG.2

AFTER DEGREASING BACKING PLATE 1, FORMING IRREGULARITIES ON SURFACE OF BACKING PLATE 1 —101

↓

POWDER COATING SURFACE OF BACKING PLATE 1 WITH RESIN POWDER WHICH BECOMES ORGANIC FILM 2 BY ELECTROSTATIC SPRAYING OR THE LIKE —102

↓

COMPLETING ORGANIC FILM 2 BY HEAT TREATMENT —103

↓

FORMING ADHESIVE LAYER 3 ON ORGANIC FILM 2 AND DRYING THE SAME —104

↓

ARRANGING FRICTION MATERIAL 4 OPPOSEDLY TO AND ON ADHESIVE MATERIAL 3 APPLIED SURFACE OF BACKING PLATE 1, INTEGRATING THE SAME AND SUBJECTING THE SAME TO HEAT TREATMENT —105